# EUROPEAN PATENT APPLICATION

(11) **EP 1 962 180 A2**
(43) Date of publication of application: **27.08.2008**
(21) Application number: 08101612.3
(22) Date of filing: 14.02.2008
(51) Int. Cl.: G06F 3/12

(54) **Optimized document printing**

(30) Priority: 20.02.2007 US 708187
(71) Applicant: Xerox Corporation, Rochester, New York 14644 (US)
(72) Inventor: Solcz, Edward J, Fairport, NY 14450 (US)
(74) Representative: Skone James, Robert Edmund

(57) **Abstract**

The method disclosed enables a user to load a document printing job into the document loading station and select the desired mode of printing from a user input adjacent the document loading station. The system automatically selects (18-30) the appropriate remote printer, based upon the user selected mode and executes the printing job. The system indicates to the user the location of the printer used for the job. If the user elects not to select a mode, the system defaults to the closest printer to the loading station.

## Description

The present invention relates to document printing and particularly printing of documents in page or sheets in an office or enterprise environment where the user maintains several different types of copying machines, such as, for example, machines having monochromatic or black and white printers and color printers of various types.

Heretofore, where it was desired to print multiple copies of documents which included a combination of black and white printed sheets and color printed sheets, it has been necessary to remove the colored sheets from the document in order to print the document economically, in as much as it is wasteful to print the black and white sheets on a color printer in terms of ink consumption. Furthermore, where it has been desired to make copies of colored sheets, the quality of the color desired may not require the print job to be run on a high quality color printer; and, particularly where speed of processing is more important than the quality of the color.

Thus, it has been desired to provide a way or means of printing or copying documents which may include a combination of black and white sheets and colored sheets in the most expeditious and economical manner, without the user being required to separate the sheets and perform the printing job individually on separate printers. This type of printing job can be particularly time consuming where the different printers are in different locations within the facilities available to the user.

In accordance with the present invention, a method of automatically optimizing document printing/copying comprises:
(a) connecting a plurality of document printers of differing types to a remote user document input station;
(b) scanning the document to be printed and creating an electronic image of the document;
(c) prompting the user to select the mode for the printing job; and,
(d) inputting the user selection to a controller and assigning the printing to one of a plurality of different printers based upon the user selected mode.

The present invention addresses the above described problem and describes a method of printing or copying of documents, typically in sheet form, that enables the user to load a document which may include a combination of colored sheets and black and white sheets, and select from a multifunction display/device or input panel a desired mode of copying, and the system proceeds to automatically determine where each page should be printed as among different copiers in different locations. The user can choose from various modes of copying including the lowest cost monochromatic or black and white, the fastest copying, the highest quality color, the lowest cost color or from the printer located nearest to the user, irrespective of the printer capability. If the user fails to make a selection, the system defaults to the nearest printer. The method of the present disclosure thus takes into account the criterion for the mode of copying selected by the user and automatically sends the sheets to the appropriate printer for carrying out the selected mode of printing and advises the user of the location of the printer used for the job.

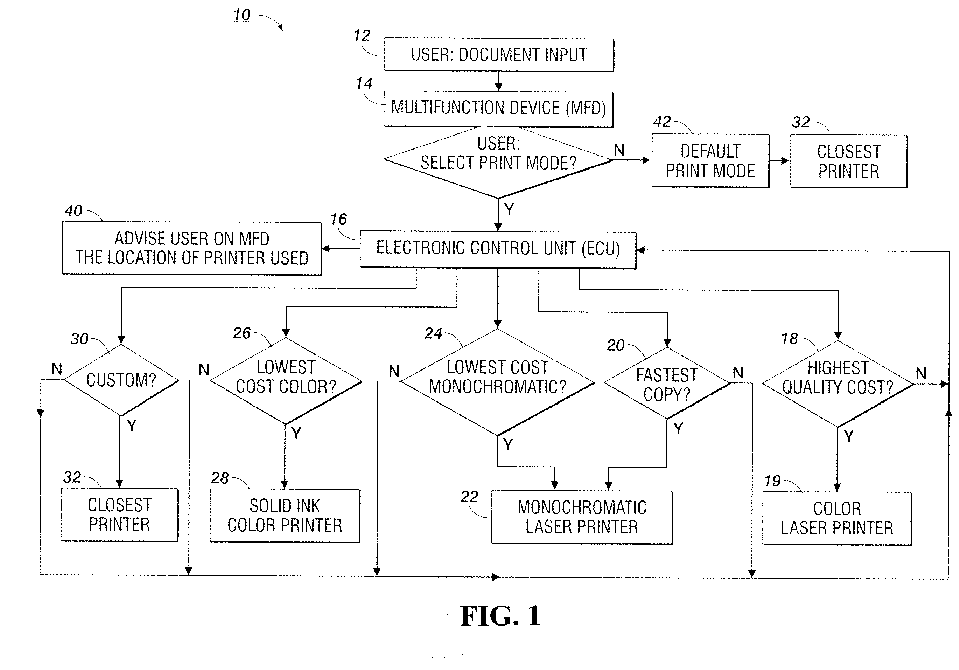

An example of a method according to the present invention will now be described with reference to Figure 1 which is a block flow diagram.

Referring to Figure 1, the method of the present disclosure is implemented by the system indicated generally at 10 in which the user loads in the document to be printed at the user input station at step 12; and the document is electronically scanned. The invention is also applicable to the printing of electronically generated documents, for example supplied directly from a word processing package or other electronic document store. The user selects the mode of printing desired at a multifunctional display/device (MFD) at step 14. The system automatically inputs the user selection of printing mode to an electronic control unit (ECU) at step 16 which automatically selects the appropriate printer.

The manner whereby the system makes the printer selection is described with respect to the drawing. The system asks the question at step 18 as to whether the user has selected the Highest Quality mode of printing; and, if the answer is affirmative, the print job is sent to a laser color printer at step 20. If the determination at step 18 is in the negative, the system returns to step 16.

The controller at step 16 then proceeds to ask the question at step 20 if the user has selected the Fastest Copy mode of printing; and, if the answer is affirmative, the print job is sent to a monochromatic or black and white laser printer at step 22. If the determination of step 20 is negative, the system returns to step 16.

At step 16, the system proceeds to step 24 and makes the inquiry as to whether the user has selected the Lowest Cost Monochromatic or black and white printing mode; and, if the determination at step 24 is in the affirmative, the system proceeds to send the printing job to the monochromatic laser printer at step 22.

If the determination at step 24 is in the negative, the system returns to step 16 and proceeds to make the inquiry at step 26 as to whether the user has selected the Lowest Cost Color mode of printing; and, if the determination at step 26 is in the affirmative, the system proceeds to send the printing job to a solid ink color printer at step 28. If the determination at step 26 is in the negative, the system returns to step 16. The system then proceeds to make the inquiry at step 30 as to whether the user has selected a Custom mode of printing or the nearest printer to the user; and, the system responds to an affirmative determination at step 30 by sending the printing job to the closest printer at step 32. However, if the determination at step 30 is negative, the system defaults to the closest printer identified in step 32.

If the determination at step 14 is negative, the system defaults, at step 42, to send the job to the printer closest to the document loading position as in step 32.

When the user has made a selection of a desired mode of printing at step 14, the ECU proceeds at step 40 to provide an indication to the user at the MFD of the location of the printer to be used for the job.

The method described in the present disclosure thus enables a user to load a printing or copying job into a loading station and select a desired mode of printing from a multifunction display or input and have the system respond to automatically determine which printer will execute the job based upon the mode of printing selected by the user without further input from the user. The method of the present invention thus automatically optimizes the printing or copying in facilities where the various printers are located at different locations and would otherwise cause loss of time and inconvenience for completing the copying job in the desired mode.

Although this example describes the handling of complete documents, it can also process individual sheets or combinations of sheets within the same document. The user, via the input station, defines a separate printing mode for each sheet or sheet combination.

## Claims

1. A method of automatically optimizing document printing/copying comprising:
(a) connecting a plurality of document printers of differing types to a remote user document input station;
(b) scanning the document to be printed and creating an electronic image of the document;
(c) prompting the user to select the mode for the printing job; and,
(d) inputting the user selection to a controller and assigning the printing to one of a plurality of different printers based upon the user selected mode.

2. The method defined in claim 1, wherein the step of user selecting includes selecting one mode of printing from the group of lowest cost color, lowest cost monochromatic, fastest copying, highest quality color and nearest.

3. The method defined in claim 1 or claim 2, wherein the step of assigning to one of the different printers includes assigning to a monochromatic printer when the user selects one of the lowest cost monochromatic or fastest copy modes of printing.

4. The method defined in any of the preceding claims, wherein the step of assigning to one of the different printers includes assigning to a solid ink printer when the user selects the lowest cost mode of printing.

5. The method defined in any of the preceding claims, wherein the step of inputting the user selection includes defaulting to the closest printer if the user elects not to select a mode of printing.

6. The method defined in any of the preceding claims, further comprising indicating to the user the location of the printer used for the job.

7. A method according to any of the preceding claims, wherein the user selects different modes of printing for each sheet or group of sheets within a document.
